# EUROPEAN PATENT SPECIFICATION

(11) **EP 0 438 289 B1**
(45) Date of publication and mention of the grant of the patent: **18.10.1995**
(21) Application number: 91300320.8
(22) Date of filing: 16.01.1991
(51) Int. Cl.: B60R 22/26, B60N 2/42

(54) **Vehicle seat safety arrangements**
Fahrzeugsitz-Sicherheitsanordnung
Dispositif de sécurité adapté à un siège de véhicule

(30) Priority: 16.01.1990 GB 9000927
(43) Date of publication of application: 24.07.1991
(73) Proprietor: AlliedSignal Limited, Kingswood, Bristol BS15 2NL (GB)
(72) Inventor: Patterson, Michael, Carlisle, Cumbria CA1 2SD (GB)
(74) Representative: W.P. THOMPSON & CO.

(56) References cited:
- EP-A- 0 264 016
- DE-A- 2 337 521
- DE-A- 2 456 028
- DE-A- 2 504 646
- DE-A- 3 613 830

## Description

This invention relates to vehicle seat safety arrangements and relates more especially to vehicle seats with reclineable back-rests.

Vehicle seats with reclineable back-rests are now commonly in use in passenger cars, more especially for front seats of such vehicles. Individual safety belts have also for many years been installed for seat occupants. Such safety belts have comprised a length of webbing extending from a floor anchorage on one side of a seat through a buckle tongue to a guide/anchorage on the B-post to a suitable retractor. The occupant is then free to insert the buckle tongue into a floor mounted buckle on the other side of the seat and the belt retractor locks up only on operation of belt or inertia sensing means initiating such locking.

Such safety belts, whilst obligatory, have tended to be a nuisance from the point of view of convenience of handling and vehicle access, particularly to the rear seats of a 2-door vehicle. Moreover the belts need to be designed or adaptable to a range of seat and reclining back positions. Accordingly, it has more recently been proposed that the safety belts of sliding and reclineable seats shall be incorporated into the movable structure of the seat itself. In such an arrangement the diagonal portion of the belt can be adapted to pay out through a guide within an aperture in the trim of the reclineable seat back itself. In such a way, the lie of the belt in relation to the seat occupant is independent of the for and aft position of the seat without the need to incorporate cumbersome moveable anchorages such as slider bars or height adjusters in the vehicle body.

One important shortcoming of the concept of integrating a passenger seat belt into the construction of the seat itself is that the seat mountings and structure need to be capable of withstanding the requisite 'g' forces in the event of a crash. In particular, the adjustable interconnection between the seat and the reclinable seat back is now subject to severe extra strain under crash conditions.

One proposal that has already been made for the above shortcoming comprises a first roller carried by the frame of the seat back and having an axis offset from the reclining axis thereof and a second roller carried by the seat frame, around which the retracting webbing passes before reversing direction around the first roller and entering the retractor. Tension in the webbing under frontal crash conditions is thereby applied to the seat back via the first roller in a sense to oppose the impulsive force applied to the seat back by the occupant.

This initial proposal can in itself have a shortcoming in so far as the additional length of webbing thereby introduced can result in the occupant being allowed to be thrown further forward whilst the normally not tight sections between the locked up retractor and the anchorages are taken up.

In a further proposal which has been disclosed in European Patent Specification EP-A-0 264 016 (A2) (corresponding to the preamble of claim 1), a vehicle seat is supported on plates having slots which permit forward and angularly upward movement of the seat in the event of forward excessive deceleration. Such forward movement results in tensioning a cable to act upon a webbing spool to tighten the webbing of a seat belt restraint.

In another proposal published in DE-A-2 456 028 a vehicle seat is provided with an integral seat belt and also downwardly concave tracks fixed to the vehicle. Drive means are provided to be activated in the event of a frontal impact to move the entire seat on these tracks about a centre located above the body of the occupant, into a safer position for the occupant. In the proposal the integral seat belt has a shortcoming in that it is likely to remain relative slack and random movement of the occupant relative to the seat may occur in a crash.

Even the publication of the above-mentioned EP-A-0 264 016 utilises a shoulder height webbing D-ring or guide loop which is attached to the vehicle body and in the case of a two-door vehicle this may therefore obstruct entry of passengers to rear seats. Moreover the mechanism proposed requires the provision of a multiplicity of mechanical component devices such as an additional cable and retractor.

The present invention seeks to provide improvement upon the above proposal to the extent of reducing the various shortcomings and increasing the safety of an occupant in frontal crash conditions.

According to the present invention there is provided a vehicle seat mechanism having a seat portion carried by a frame and a seat back portion pivotally connected to be angularly movable relative to the seat portion, a safety restraint having a length of webbing emanating from the seat back portion via a webbing guide at approximately shoulder height to restraint the torso of an occupant and including vehicle deceleration responsive pretensioning means operable to tension the seat belt in anticipation of a crash condition, characterised in that said pretensioning means is also operable to rearwardly tilt said seat back portion relative to the seat portion.

In accordance with a feature of the invention said vehicle deceleration responsive device is arranged also to withdraw a portion of said webbing into the reclining portion of the seat.

In order that the invention may be more clearly understood and readily carried into effect the same will be further described by way of examples with reference to the accompanying drawings of which
Fig. 1 illustrates a first embodiment and
Fig. 2 illustrates a second and alternative embodiment.

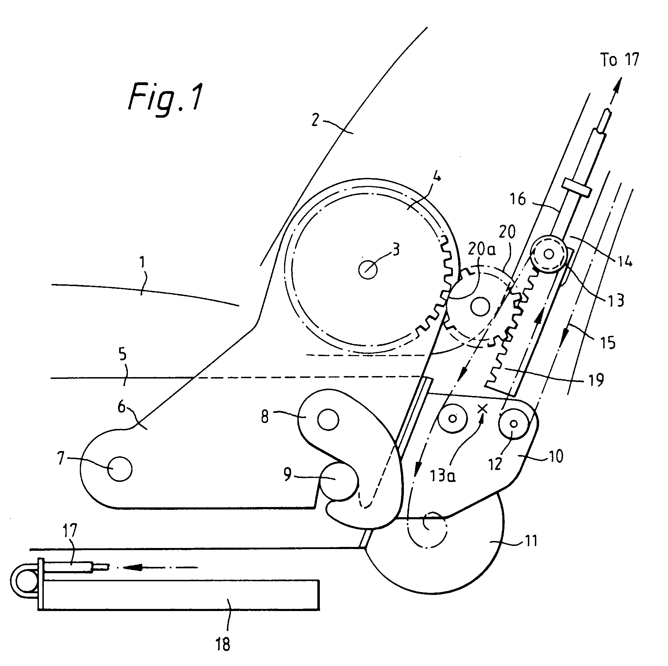

Referring to Fig. 1 of the drawings this diagrammatical representation indicates a seat cushion 1 and a seat back 2 which is reclineable about an axis 3 by a manual drive mechanism (not shown). The mechanism includes a gear wheel 4 locked to the frame of the seat back. The seat back is provided with a pivotally supported tilt-frame on the conventionally slideable main frame 5 by side-plates such as indicated at 6, pivotally carried at 7 and normally lockable in the operative position shown by a substantial hook-latch 8 designed to lockingly engage a bar 9 carried by the frame. Subject to strength and rigidity requirements of a vehicle seat wherein the seat belt is integrally installed, the reclining and seat tilting arrangements are conventional.

In order to cater for integral installation of a seat belt and its retractor 11 the main frame 5 is provided with a rearwardly extending bracket 10 which supports the retractor 11. Retractor 11 is a functionally conventional retractor of a type having a webbing reel which affords automatic belt retracting but imposes belt reel lock up in the event of excessive belt withdrawal rate or excessive vehicle rate-of-speed-change. Bracket 10 also carries a second webbing guide roller 12 via which and a first guide roller 13, carried by a seat back frame part 14, the seat belt webbing denoted by chain-dotted lines 15 pays out from the forward side of the retractor reel. The positioning of roller 13 is arranged to permit a normal reclining action of the seat back and when the latter is fully reclined about axis 3 the position of the centre of roller 13 may be as indicated at 13a. At all times the belt 15 therefore extends from roller 12 and through the seat-back to emanate from an aperture at approximately shoulder height providing the normal diagonal and lap arrangement when engaged into a buckle.

In a particular feature of the present invention the roller 13 is slideably mounted to the seat back tilt frame part 14 such as to be movable transversely to its axis in a direction tending to increase the distance between roller 13 and the main-frame bracket 10. Such movement is effectable by tensional operation of a 'Bowden' cable the "output" end of which is indicated at 16. The input end of the cable, indicated at 17, is connected to a pretensioner device 18 which is normally "armed" and operates only upon the occurrence of more than a predetermined forward deceleration of the vehicle. The device 18 is of previously proposed or alternative construction and need not be described herein. Suffice it to say that device 18 is preferably mounted not on the seat frame but on the vehicle body such as to not be actuable by violent seat adjustment by its occupant.

Carried in the seat back tilt frame to be movable with roller 13 in slide means (not shown), there is a gear rack 19 continuously meshing with an idler pinion 20 which in turn is meshable with gear wheel 4. However it will be seen that by virtue of an untoothed area 20a, of pinion 20 the gear wheel 4 is normally able to move independently of 20 for normal reclining seat rake adjustment.

In operation of the vehicle seat of Fig. 1 seat rake adjustment and fore and aft seat frame setting can be made by an occupant in the conventional manner. Normal use can also be made of the integral seat belt, which in the event of a crash will be locked up by the retractor 11. In the event of such lock-up as a result of a frontal impact, since the belt webbing is supported by the seat back the full forward impulse exerted by the inertia of the torso of the occupant is applied to the seat back such that massive strains tend to be exerted on the reclining gear including gear wheel 4. However, by virtue of the arrangement of rollers 12 and 13, the said forces are partially compensated for by the downward tensions in the two portions of webbing 15 which extend downwards from roller 13.

By virtue of the setting of pretensioner 18 being suitably selected moreover, the pretensioner actuates roller 13 via a Bowden cable 16 at an early point in the progressive action of an impact. This has the effect of immediately overriding the manual drive and angularly deflecting the seat back rearward through a small angle of about 5 degrees by the action of rack 19 and resultant engagement of pinion 20 with gear wheel 4. This and the pretensioning of the belt webbing itself act in a sense to draw the occupant rearward and away from a position of impact with the vehicle interior.

The armed pretensioner is preferably set to operate in response to a given vehicle deceleration value being attained, in advance of serious impact damage being sustaintable by the vehicle and its occupants. In other words the pretensioner operates fast enough to withdraw the belt webbing and rearwardly tilt the seat back frame in anticipation of development of a serious impact.

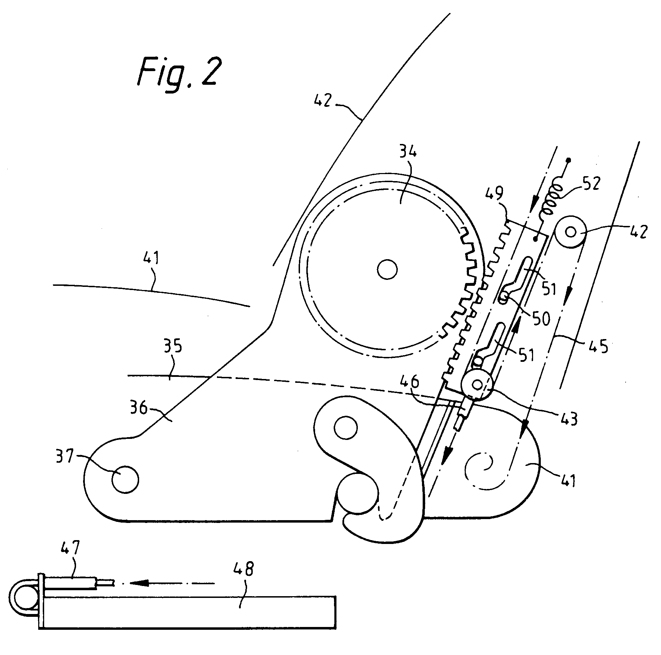

Referring now to Fig. 2 of the drawings, the vehicle seat is substantially the same as the seat of Fig. 1 in so far as it incorporates a seat 31 and reclining seat back 32 with an integrally mounted seat belt with webbing 45 and retractor 41. However the retractor 41 is now mounted such that it pays out webbing from the rear side of its reel via two first and second guide rollers 42 and 43 before again passing out of the seat back near an occupants shoulder height. The first roller 42 is located at a fixed position in the frame of the reclining seat back whereas the second roller 43 is carried by a rack 49 slidingly downwardly movable into a position in which it meshes with the gear wheel 34. This is effected by 49 being guided by guide slots 51, riding on fixed pins 50 of the seat back tilt frame, the rack normally being held in the disengaged position as shown by a light spring 52.

As in the case of the arrangement of Fig. 1, the manual drive is overriden as the rack is moved into the engaged position by a "Bowden" cable 46/47 activated by a pretensioner 48. However the end 46 of the cable casing is anchored to the tilt frame 36 of the reclining seat back.

In operation of the vehicle seat of Fig. 2 the pretensioner again senses a vehicle deceleration which attains a given value in anticipation of serious impact and whilst overriding the manual drive urges the rack 49 downwards causing its engagement with the gear wheel 34 and resultant small angular rearward tilting of the seat. At the same time the downward movement of roller 43 causes tensioning of the now locked up belt webbing 45 around the torso of the occupant. The length of webbing 45 between the roller 42 and the retractor maintains a force on the reclining seat back which acts oppositely to the impulsive force exerted by the occupant on the seat back via the tightened belt and enhances the ultimate crash performance of the seat construction.

In yet another version of a seat according to the invention the rearward angular movement of the seat back may be achieved by effecting tilting by an excentric action at pivot 7 (Fig. 1) or 37 (Fig. 1) causing elemental pivotting about bar 9 (Fig. 1) or 39 (Fig. 2).

## Claims

1. A vehicle seat mechanism having a seat portion (1;41) carried by a frame (5;35), a seat back portion (2;42) pivotally connected to be angularly movable relative to the seat portion (1;41), and a seat belt having a length of webbing emanating from the seat back portion via a webbing guide at approximately shoulder height to restrain the torso of an occupant and including vehicle deceleration responsive pretensioning means (18;48) operable to tension the seat belt in anticipation of a crash condition, characterised in that said pretensioning means is also operable to rearwardly tilt said seat back portion (2;42) relative to the seat portion (1;41).

2. A vehicle seat mechanism as claimed in claim 1, the seat belt having an emergency locking webbing retractor (11;41) mounted on the frame (5;35) and characterised in that the webbing (15;45) of the restraint passes from the retractor and around a guide member (13;42) carried by the seat back portion (2;42) whereby tension in said webbing acts in a sense tending to rearwardly recline said seat back portion.

3. A vehicle seat mechanism as claimed in claim 2 characterised in that said webbing passes around a succession of guide members one of which is carried by the pretensioning means.

4. A vehicle seat mechanism as claimed in claim 3 said pretensioning means including means (19;49) engageable with a seat back tilting gear (4;34) of the seat back (2;42) to effect said angularly rearward movement.

5. A vehicle seat mechanism as claimed in claim 3 or 4 characterised in that the webbing (15) extends upwards from said retractor (11) and around a first of said guide members (13) carried by the pretensioning means downwards from said first guide member (13) and around a second (12) of said guide members carried by said seat frame (10) and upward from said second guide (12) member to emanate from said point of the seat back portion.

6. A vehicle seat mechanism as claimed in claim 3 or 4 characterised in that the webbing (45) extends upward from said retractor (41) and around a first of said guide members (42) mounted to said seat back portion downward and around a second of said guide members (43) carried by the pretensioning means and upward from said second guide member (43) to emanate from said point of the seat back portion.

7. A vehicle seat mechanism as claimed in claim 5 or 6 characterised in that said pretensioning means comprises a gear rack member (19;49) movably mounted to the seat belt back portion.

8. A vehicle seat mechanism as claimed in any preceding claim characterised in that said deceleration responsive device comprises a device (48) which is supported independently of the seat frame and mechanically connected via a Bowden cable (17) to means (16;46) carried by the seat back portion.

## Patentansprüche

1. Fahrzeugsitzmechanismus mit einem Sitzteil (1;41), der von einem Rahmen (5;35) getragen wird, einem Rückenlehnenteil (2;42), der schwenkbar verbunden ist, so daß er winkelmäßig relativ zu dem Sitzteil (1;41) bewegt werden kann, und einem Sitzgurt mit einer Gurtbandlänge, die über eine Gurtbandführung etwa auf Schulterhöhe aus dem Rückenlehnenteil austritt, um den Rumpf eines Insassen festzuhalten, wobei der Mechanismus ein auf die Fahrzeugabbremsung reagierendes Vorspannmittel (18;48) aufweist, das den Sitzgurt in Erwartung eines Aufpralles spannt, dadurch gekennzeichnet, daß das genannte Vorspannmittel auch dazu dient, den genannten Rückenlehnenteil (2;42) relativ zu dem Sitzteil (1;41) nach hinten zu kippen.

2. Fahrzeugsitzmechanismus nach Anspruch 1, wobei der Sitzgurt eine Gurtbandaufrollvorrichtung (11;41) mit Notfallverriegelung aufweist, die an dem Rahmen (5;35) montiert und dadurch gekennzeichnet ist, daß das Gurtband (15;45) der Rückhalteautomatik von der Aufrollvorrichtung um ein Führungselement (13;42) herum verläuft, das von dem Rückenlehnenteil (2;42) getragen wird, so daß die Spannung in dem genannten Gurtband in einer Richtung wirkt, die dazu neigt, den Rückenlehnenteil nach hinten zu neigen.

3. Fahrzeugsitzmechanismus nach Anspruch 2, dadurch gekennzeichnet, daß das genannte Gurtband um eine Folge von Führungselementen herum verläuft, von denen eines von dem Vorspannmittel getragen wird.

4. Fahrzeugsitzmechanismus nach Anspruch 3, wobei das genannte Vorspannmittel ein Mittel (19;49) aufweist, das in ein Rückenlehnen-Kippzahnrad (4;34) der Rückenlehne (2;42) eingreift, um die genannte winkelmäßige Rückwärtsbewegung zu bewirken.

5. Fahrzeugsitzmechanismus nach Anspruch 3 oder 4, dadurch gekennzeichnet, daß das Gurtband (15) von der genannten Aufrollvorrichtung (11) nach oben und um ein erstes der genannten Führungselemente (13), das von dem Vorspannmittel getragen wird, herum, dann von dem genannten ersten Führungselement (13) nach unten und um ein zweites (12) der genannten Führungselemente, das von dem genannten Sitzrahmen (10) getragen wird, herum und von dem genannten zweiten Führungselement (12) nach oben verläuft und dann aus der genannten Stelle des Rückenlehnenteiles austritt.

6. Fahrzeugsitzmechanismus nach Anspruch 3 oder 4, dadurch gekennzeichnet, daß das Gurtband (45) von der genannten Aufrollvorrichtung (41) nach oben und um ein erstes der genannten Führungselemente (42), das an dem genannten Rückenlehnenteil montiert ist, herum, dann nach unten und um ein zweites der genannten Führungselemente (43), das von dem Vorspannmittel getragen wird, herum und von dem genannten zweiten Führungselement (43) nach oben verläuft und aus der genannten Stelle des Rückenlehnenteiles austritt.

7. Fahrzeugsitzmechanismus nach Anspruch 5 oder 6, dadurch gekennzeichnet, daß das genannte Vorspannmittel ein Zahnstangenelement (19;49) aufweist, das beweglich am rückwärtigen Teil des Sitzgurtes montiert ist.

8. Fahrzeugsitzmechanismus nach einem der vorhergehenden Ansprüche, dadurch gekennzeichnet, daß die auf eine Abbremsung reagierende Vorrichtung eine Vorrichtung (48) umfaßt, die unabhängig von dem Sitzrahmen gestützt und mechanisch über einen Bowden-Zug (17) mit einem Mittel (16;46) verbunden ist, das von dem Rückenlehnenteil getragen wird.

## Revendications

1. Mécanisme de siège d'un véhicule présentant une portion de siège (1;41) portée par un cadre (5;35), une portion de dossier (2;42) reliée de façon pivotante afin d'être déplaçable angulairement par rapport à la portion de siège (1;41), et une ceinture de sécurité présentant une longueur de sangle émanant de la portion de dossier par l'intermédiaire d'un guide de sangle à approximativement hauteur d'épaule pour retenir le torse d'un occupant et comportant un moyen de précontrainte (18;48) réagissant à la décélération du véhicule opérable pour raidir la ceinture de sécurité par anticipation d'un état de collision, caractérisé en ce que ledit moyen de précontrainte est également opérable pour incliner vers l'arrière ladite portion de dossier (2;42) par rapport à la portion de siège (1;41).

2. Mécanisme de siège d'un véhicule selon la revendication 1, la ceinture de sécurité présentant un enrouleur (11;41) de sangle à verrouillage d'urgence monté sur le cadre (5;35) et caractérisé en ce que la sangle (15;45) du dispositif de retenue passe depuis l'enrouleur et autour d'un élément de guidage (13;42) porté par la portion de dossier (2;42) de sorte que la tension dans ladite sangle agisse dans un sens ayant tendance à incliner vers l'arrière ladite portion de dossier.

3. Mécanisme de siège d'un véhicule selon la revendication 2, caractérisé en ce que ladite sangle passe autour d'une succession d'éléments de guidage, l'un desquels est porté par le moyen de précontrainte.

4. Mécanisme de siège d'un véhicule selon la revendication 3, ledit moyen de précontrainte comportant un moyen (19;49) enclenchable avec un engrenage d'inclinaison de dossier (4;34) du dossier (2;42) pour effectuer ledit mouvement angulaire vers l'arrière.

5. Mécanisme de siège d'un véhicule selon la revendication 3 ou 4, caractérisé en ce que la sangle (15) s'étend vers le haut depuis ledit enrouleur (11) et autour d'un premier desdits éléments de guidage (13) porté par le moyen de précontrainte vers le bas depuis ledit premier élément de guidage (13) et autour d'un deuxième (12) desdits éléments de guidage porté par ledit cadre de siège (10) et vers le haut depuis ledit deuxième élément de guidage (12) pour émaner dudit point de la portion de dossier.

6. Mécanisme de siège d'un véhicule selon la revendication 3 ou 4, caractérisé en ce que la sangle (45) s'étend vers le haut depuis ledit enrouleur (41) et autour d'un premier desdits éléments de guidage (42) monté sur ladite portion de dossier vers le bas et autour d'un deuxième desdits éléments de guidage (43) porté par le moyen de précontrainte et vers le haut depuis ledit deuxième élément de guidage (43) pour émaner dudit point de la portion de dossier.

7. Mécanisme de siège d'un véhicule selon la revendication 5 ou 6, caractérisé en ce que ledit moyen de précontrainte comporte un élément de crémaillère d'engrenage (19;49) monté de manière déplaçable sur la portion arrière de la ceinture de sécurité.

8. Mécanisme de siège d'un véhicule selon l'une quelconque des revendications précédentes, caractérisé en ce que ledit dispositif réagissant à la décélération comporte un dispositif (48) qui est supporté indépendamment du cadre du siège et relié mécaniquement par l'intermédiaire d'un câble Bowden (17) à des moyens (16;46) portés par la portion de dossier.
